(19) **Europäisches Patentamt / European Patent Office / Office européen des brevets**

(11) **EP 4 414 420 B1**

(12) **EUROPEAN PATENT SPECIFICATION**

(45) Date of publication and mention
of the grant of the patent:
**08.04.2026  Bulletin 2026/15**

(21) Application number: **22878413.8**

(22) Date of filing: **29.09.2022**

(51) International Patent Classification (IPC):
*C08L 27/16* (2006.01)          *C08F 214/22* (2006.01)
*C08K 5/07* (2006.01)           *C08K 5/10* (2006.01)

(52) Cooperative Patent Classification (CPC):
(C-Sets available)
**C08F 214/22; C08J 3/09; C08J 5/18; C09D 127/16**
(Cont.)

(86) International application number:
**PCT/JP2022/036378**

(87) International publication number:
**WO 2023/058543 (13.04.2023 Gazette 2023/15)**

(54) **VINYLIDENE FLUORIDE POLYMER SOLUTION**

VINYLIDENFLUORIDPOLYMERLÖSUNG

SOLUTION DE POLYMÈRE DE FLUORURE DE VINYLIDÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2021  JP 2021164151**

(43) Date of publication of application:
**14.08.2024  Bulletin 2024/33**

(73) Proprietor: **Kureha Corporation
Chuo-ku
Tokyo 103-8552 (JP)**

(72) Inventors:
• **ODAGAWA, Nozomu**
**Tokyo 103-8552 (JP)**
• **NAGASAWA, Yoshiyuki**
**Tokyo 103-8552 (JP)**

(74) Representative: **Novagraaf Group
Chemin de l'Echo 3
1213 Onex / Geneva (CH)**

(56) References cited:
WO-A1-2019/230140     WO-A1-2020/054548
WO-A1-2021/039468     WO-A1-2021/039950
WO-A1-2021/039950     WO-A1-2021/166968
JP-A- 2016 025 027    JP-A- 2017 160 365

Remarks:
The file contains technical information submitted
after the application was filed and not included in this
specification

(52) Cooperative Patent Classification (CPC): (Cont.)

C-Sets
**C08F 214/22, C08F 214/28**

## Description

### [TECHNICAL FIELD]

The present invention relates to a vinylidene fluoride polymer solution.

### [BACKGROUND ART]

Vinylidene fluoride polymers are used in a wide range of applications for their excellent weather resistance and chemical resistance. However, vinylidene fluoride polymers are hardly dissolved in common solvents. Therefore, in a paint, a coating agent or the like, where dissolving vinylidene fluoride polymers are necessary, N-methylpyrrolidone (NMP) or acetone is used as a solvent.

However, acetone has a low flash point and boiling point, making it difficult to handle. Also, NMP can easily dissolve vinylidene fluoride polymers and has a high boiling point. However, in recent years, concerns about its toxicity have led to strict regulatory restrictions. Hexamethylphosphoramide and dimethylsulfoxide are also known as solvents capable of dissolving a vinylidene fluoride polymer. However, these solvents also have relatively high freezing points, and thus cannot be said to be easily handled.

Patent Document 1 describes a coating composition in which an acrylic resin and a vinylidene fluoride polymer are dissolved in cyclohexanone or the like.

[Citation List]

[Patent Document]

    Patent Document 1: JP 03-220272 A
    Patent Document 2: WO 2021 039950 A1

### [SUMMARY OF INVENTION]

[Technical Problem]

However, as a result of intensive studies by the present inventors, it has been found that, when the vinylidene fluoride polymer described in Patent Document 1 is dissolved alone in a solvent, its solubility in the solvent is not sufficient, and that dissolving the vinylidene fluoride polymer takes a very long time. In other words, with known technologies, it has been very difficult to dissolve a vinylidene fluoride polymer in a solvent having a lower environmental impact and good handling properties. Patent Document 2 discloses polymer binders for secondary batteries that contain a vinylidene fluoride component and a hexafluoropropylene component. Polymers are dissolved in butyl butyrate to obtain a binder solution.

The present invention has been made in view of the above issues. An object is to provide a vinylidene fluoride polymer solution in which a vinylidene fluoride polymer is dissolved in a solvent that has a lower environmental impact and is easy to handle.

[Solution to Problem]

The present invention provides a vinylidene fluoride polymer solution containing a vinylidene fluoride polymer and a solvent, the solvent including an affinity solvent having a molecular weight of 100 or more and containing at least one structure selected from ethers, ketones, and esters, and the vinylidene fluoride polymer satisfying the following (A) to (C):

    (A) containing a structural unit derived from vinylidene fluoride and a structural unit derived from a fluorine-containing alkyl vinyl compound;
    (B) having a peak top in a range of 60°C or higher and lower than 100°C in a DSC curve obtained by differential scanning calorimetry in accordance with ASTM D3418; and
    (C) in an X-ray diffraction pattern obtained by X-ray diffraction measurement, having at least one local maximum value in a diffraction angle range of 10° or more and 19.9° or less, and a maximum diffraction intensity in a diffraction angle range of 22.5° or more and 30° or less is equal to or less than a maximum diffraction intensity in a diffraction angle range of 10° or more and 19.9° or less.

[Advantageous Effects of Invention]

The present invention can provide a vinylidene fluoride polymer solution in which a vinylidene fluoride polymer is dissolved in a solvent that has a lower environmental impact and is easy to handle.

[Brief Description of the Drawings]

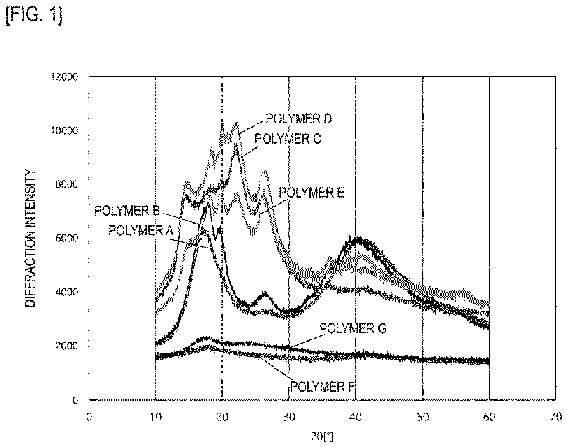

FIG. 1 is an X-ray diffraction pattern obtained when X-ray diffraction measurement is performed on vinylidene fluoride polymers A to G prepared in Examples of the present application.

[Description of Embodiments]

As described above, it has been difficult to dissolve common vinylidene fluoride polymers in solvents such as ethers, ketones, and esters, for example, which have a low environmental impact and are relatively easy to handle. In contrast, the vinylidene fluoride polymer solution of the present invention, a vinylidene fluoride polymer satisfying the below-described Requirements (A) to (C) is combined with a solvent containing an affinity solvent having a molecular weight of 100 or more and containing at least one structure selected from ethers, ketones, and esters. This makes it possible to easily dissolve the vinylidene fluoride polymer in the above solvent, improving the stability of the polymer. Hereinafter, the vinylidene fluoride polymer solution will be described.

• Vinylidene fluoride polymer

The vinylidene fluoride polymer contained in the vinylidene fluoride polymer solution according to the present invention contains a structural unit derived from vinylidene fluoride and a structural unit derived from a fluorine-containing alkyl vinyl compound (Requirement (A)).

The vinylidene fluoride polymer may contain at least a structure derived from vinylidene fluoride and a structure derived from one or more fluorine-containing alkyl vinyl compounds, and may be a binary copolymer of vinylidene fluoride and a fluorine-containing alkyl vinyl compound or a ternary copolymer of vinylidene fluoride, a fluorine-containing alkyl vinyl compound and another compound. Further, the ones obtained by adding an additive such as a polymer modifier to these copolymers may also be employed. However, a total amount of the structural units derived from vinylidene fluoride and the structural units derived from a fluorine-containing alkyl vinyl compound is preferably 90 mass% or more, more preferably 95 mass% or more, and still more preferably 97 mass% or more, with respect to all structural units of the vinylidene fluoride polymer. When the total amount of the structural units derived from vinylidene fluoride and the structural units derived from a fluorine-containing alkyl vinyl compound is within the above range, solubility of the vinylidene fluoride polymer in the solvent, which will be described below, is likely to improve.

Here, when the total amount of the structural units derived from vinylidene fluoride and the structural units derived from a fluorine-containing alkyl vinyl compound is 100 mass%, an amount of the structural units derived from vinylidene fluoride in the vinylidene fluoride polymer is preferably from 40 to 75 mass%, and more preferably from 51 to 70 mass%. It is still more preferably from 55 to 68 mass%. When the amount of the structural unit derived from vinylidene fluoride in the vinylidene fluoride polymer is 40 mass% or more, physical properties derived from vinylidene fluoride are likely to be exhibited. On the other hand, when the amount of the structural unit derived from vinylidene fluoride in the vinylidene fluoride polymer is 75 mass% or less, an amount of the structure derived from a fluorine-containing alkyl vinyl compound becomes sufficiently large, and the solubility in the solvent described later is likely to be enhanced. The amount of the structural units derived from vinylidene fluoride in the vinylidene fluoride polymer can be specified by, for example, $^{19}$F-NMR analysis or the like.

On the other hand, when the total of the structural units derived from vinylidene fluoride and the structural units derived from a fluorine-containing alkyl vinyl compound is 100 mass%, the amount of the structural units derived from a fluorine-containing alkyl vinyl compound in the vinylidene fluoride polymer is preferably from 25 to 60 mass%, more preferably from 30 to 49 mass%, and still more preferably from 32 to 45 mass%. When the amount of the structural units derived from a fluorine-containing alkyl compound in the vinylidene fluoride polymer is 25 mass% or more, the solubility in the solvent which will be described later is improved. On the other hand, when the amount of the structural units derived from a fluorine-containing alkyl vinyl compound in the vinylidene fluoride polymer is 60 mass% or less, the amount of the structure derived from vinylidene fluoride becomes sufficiently large, and the physical properties derived from vinylidene fluoride are likely to be exhibited. The amount of the structural units derived from a fluorine-containing alkyl vinyl compound in the vinylidene fluoride polymer can be specified by, for example, $^{19}$F-NMR analysis or the like.

The fluorine-containing alkyl vinyl compound may be a compound having a vinyl group and a fluorine-containing alkyl group, and the vinylidene fluoride polymer may contain only one structural unit derived from a fluorine-containing alkyl vinyl compound, or may contain two or more structural units derived from a fluorine-containing alkyl vinyl compound.

Examples of the fluorine-containing alkyl vinyl compound include vinyl fluoride, trifluoroethylene, tetrafluoroethylene, chlorotrifluoroethylene, hexafluoropropylene, fluoroalkyl vinyl ether, and perfluoroalkyl vinyl ether represented by perfluoromethyl vinyl ether. Among them, from the perspective that Requirements (B) and (C) are easily satisfied, tetrafluoroethylene, chlorotrifluoroethylene, and hexafluoropropylene are preferable, and hexafluoropropylene is more preferable.

The vinylidene fluoride polymer may have a structural unit derived from a monomer other than the vinylidene fluoride and the fluorine-containing alkyl vinyl compound (hereinafter also referred to as "another monomer"). Examples of such another monomer also include an unsaturated basic acid and an unsaturated basic acid ester.

The unsaturated basic acid may be an unsaturated carboxylic acid or a derivative thereof, and examples thereof include compounds with one or more carboxyl groups bonded by a linear or branched unsaturated alkylene group having from 1 to 6 carbon atoms. More specific examples of the unsaturated basic acid include acrylic acid, methacrylic acid, crotonic acid, maleic acid, fumaric acid, itaconic acid, and citraconic acid.

The unsaturated basic acid ester is an ester compound derived from the unsaturated basic acid, and specific examples thereof include acrylic acid methyl ester, methacrylic acid methyl ester, maleic acid monomethyl ester, maleic acid monoethyl ester, maleic acid dimethyl ester, citraconic acid monomethyl ester, and citraconic acid monoethyl ester.

The vinylidene fluoride polymer has a peak top in a range of 60°C or higher and lower than 100°C in a DSC curve obtained by differential scanning calorimetry in accordance with ASTM D3418 (Requirement (B)).

A DSC curve is a curve obtained by performing differential scanning calorimetry while changing the temperature in accordance with ASTM D3418. The temperature range at the time of measurement can be usually from 20°C to 230°C. In the present specification, a group of measured values that is convex to an endothermic side with respect to a baseline is regarded as a peak. The definition of the baseline in differential scanning calorimetry will be indicated below. An average value of heat fluxes and an average value of temperatures at a plurality of measurement points in a range of 40°C or higher and 41°C or lower are each calculated. Similarly, an average value of heat fluxes and an average value of temperatures at a plurality of measurement points in a range of 120°C or higher and 121°C or lower are each calculated. A straight line connecting two points of the average value of the values at the plurality of measurement points in the range of 40°C or higher and 41°C or lower and the average value of the values at the plurality of measurement points in the range of 120°C or higher and 121°C or lower calculated as described above is used as the baseline. In the differential scanning calorimetry, measurement is desirably performed so that three or more measurement points are present in each temperature range (40°C or higher and 41°C or lower and 120°C or higher and 121°C or lower).

Here, when the vinylidene fluoride polymer has a peak top in the range of 60°C or higher and lower than 100°C in the DSC curve, the vinylidene fluoride polymer is likely to soften or melt at 60°C or higher and lower than 100°C. That is, since a diffusion motion of a molecular chain of the vinylidene fluoride polymer is accelerated in the temperature range, swelling in the solvent and disentanglement are promoted, and the polymer is easily dissolved in the solvent which will be described later. The vinylidene fluoride polymer more preferably has a peak top in a range of 60°C or higher and 90°C or lower in the DSC curve.

In order to adjust the vinylidene fluoride polymer so that the DSC curve has a peak top in the range of 60°C or higher and lower than 100°C, it is preferable to adjust the amount of the structural unit derived from vinylidene fluoride and the amount of the structural unit derived from a fluorine-containing alkyl vinyl compound in the vinylidene fluoride polymer to the above-mentioned ranges.

The vinylidene fluoride polymer has at least one local maximum value in a diffraction angle range of 10° or more and 19.9° or less in an X-ray diffraction pattern obtained by X-ray diffraction measurement, and a maximum diffraction intensity in a diffraction angle range of 22.5° or more and 30° or less is equal to or less than a maximum diffraction intensity in a diffraction angle range of 10° or more and 19.9° or less (Requirement (C)).

Here, the X-ray diffraction measurement is performed in accordance with JIS K0131: 1996. In the present specification, the expression "has at least one local maximum value in a diffraction angle range of 10° or more and 19.9° or less" means that the X-ray diffraction pattern has a peak and the local maximum value of the peak is present in the diffraction angle range of 10° or more and 19.9° or less. Whether the X-ray diffraction pattern has a peak is determined as follows. First, the baseline is specified as follows. Then, the diffraction intensity at a point on the baseline is compared with the diffraction intensity on the X-ray diffraction pattern at the same diffraction angle. When the diffraction intensities at continuous five or more points on the X-ray diffraction pattern indicate a value of 1.5 times or more the corresponding diffraction intensities on the baseline, it is determined that the X-ray diffraction pattern has a peak. In addition, a local maximum value is specified in a group of measured values in which the diffraction intensities at continuous five or more points on the X-ray diffraction pattern indicate a value of 1.5 times or more the diffraction intensities on the baseline, and it is determined whether or not the local maximum value falls within the diffraction angle range of 10° or more and 19.9° or less.

In the present specification, the baseline in the X-ray diffraction measurement is defined as follows. An average value of diffraction angles and an average value of diffraction intensities at a plurality of measurement points in a diffraction angle range of 10.0° or more and less than 10.1° are each calculated. Similarly, an average value of diffraction angles and an average value of diffraction intensities at a plurality of measurement points in a diffraction angle range of 30.0° or more and less than 30.1° are each calculated. Then, a straight line connecting two points of the values of the diffraction angle and the diffraction intensity calculated as described above is used as the baseline. From the perspective of measurement accuracy, the average value of the values at the plurality of measurement points for calculating the baseline, i.e., the average value of the values at the measurement points in the range of 10.0° or more and less than 10.1° and the average value of the values at the measurement points in the range of 30.0° or more and less than 30.1° are, desirably, each an average value of the values at five or more points. In addition, when the weight of a sample used for measurement is 0.1 g or more, an accurate measurement value is easily obtained.

The X-ray diffraction pattern of the vinylidene fluoride polymer represents a crystallization state of the vinylidene fluoride polymer. The position of the local maximum value of the diffraction intensity in the X-ray diffraction pattern varies depending on the type of crystal structure.

For example, when the vinylidene fluoride polymer has a large number of local maximum values in a diffraction angle range of 10° or more and 30° or less as in the case of a vinylidene fluoride polymer D (homopolymer of vinylidene fluoride) in Examples which will be described later, it can be said that the vinylidene fluoride polymer includes a large number of crystal structures (see FIG. 1). A large amount of energy is required to dissolve such a vinylidene fluoride homopolymer in a solvent. In addition, the present inventors' studies have revealed that the solubility in the solvent which will be described below is low particularly when the vinylidene fluoride polymer includes a large number of crystal structures that appear in a diffraction angle range of 22.5° or more and 30° or less.

On the other hand, when the vinylidene fluoride polymer does not have a local maximum value in the X-ray diffraction pattern as in the case of a vinylidene fluoride polymer G in Examples which will be described later, the vinylidene fluoride polymer does not have a crystal structure and is rubbery (see FIG. 1). In such a vinylidene fluoride polymer, it is difficult for the solvent to enter the inside thereof, and the solubility of the vinylidene fluoride polymer in the solvent becomes low.

On the other hand, in the vinylidene fluoride polymer having at least one local maximum value in the diffraction angle range of 10° or more and 19.9° or less in which the maximum diffraction intensity in the diffraction angle range of 22.5° or more and 30° or less is equal to or less than the maximum diffraction intensity in the diffraction angle range of 10° or more and 19.9° or less, the solubility in the solvent which will be described later becomes remarkably high. It is considered that such a vinylidene fluoride polymer has high solubility in the above-described solvent because it has a small number of crystal structures having low solubility in the solvent and the solvent can appropriately easily enter the inside of the vinylidene fluoride polymer.

The vinylidene fluoride polymer satisfying Requirement (C) is easily obtained by adjusting the amount of the structural unit derived from vinylidene fluoride and the amount of the structural unit derived from a fluorine-containing alkyl vinyl compound in the vinylidene fluoride polymer to the above-described ranges. In addition, it is preferable to prepare the vinylidene fluoride polymer or to perform a treatment after the preparation, under such conditions that the crystal structure in which the local maximum value appears in the diffraction angle range of 10° or more and 19.9° or less is not destroyed. Examples of the treatment for destroying the crystal structure include a treatment for dissolving the prepared vinylidene fluoride polymer in a solvent such as acetone.

A weight average molecular weight of the vinylidene fluoride polymer satisfying Requirements (A) to (C) is preferably 10000 or more and 2500000 or less, more preferably 50000 or more and 2000000 or less, and still more preferably 100000 or more and 1500000 or less. The weight average molecular weight is a value measured by gel permeation chromatography (GPC) calibrated with polystyrene. When the weight average molecular weight of the vinylidene fluoride polymer is in the above range, the vinylidene fluoride polymer is more easily dissolved in the solvent which will be described later.

The vinylidene fluoride polymer satisfying the above Requirements (A) to (C) can be prepared by copolymerizing vinylidene fluoride, a fluorine-containing alkyl vinyl compound, and another compound as necessary by a known method. Examples of the method for copolymerizing them include suspension polymerization, emulsion polymerization, and solution polymerization. Here, emulsion polymerization is preferable from the perspective that a vinylidene fluoride polymer satisfying the above-described Requirements (B) and (C) is easily obtained. Since the vinylidene fluoride polymer copolymerized by emulsion polymerization has a small primary particle size, the polymer is easily dispersed and has improved stability after dispersion.

• Solvent

A solvent contained in the vinylidene fluoride polymer solution may contain at least an affinity solvent having a molecular weight of 100 or more and containing at least one structure selected from ethers, ketones, and esters, and may partially include another solvent as long as the objects and effects of the present invention are not impaired. However, an amount of the affinity solvent with respect to a total amount of the solvent is preferably 80 mass% or more, and more preferably 90 mass% or more.

When the molecular weight of the affinity solvent is 100 or more, even a solvent having an ether, a ketone, or an ester as a polar group has an appropriately reduced polarity, and thus the affinity with the vinylidene fluoride polymer is enhanced. The molecular weight of the affinity solvent is preferably 100 or more and 251 or less, more preferably 100 or more and 201 or less, and still more preferably 100 or more and 161 or less.

In addition, the affinity solvent may include only one of ethers, ketones, and esters, or may include two or more thereof. The solvent may include only one affinity solvent or two or more affinity solvents.

Here, an octanol/water partition coefficient LogP of the affinity solvent is preferably 0 or more, more preferably 0 or more and 4 or less, still more preferably 0 or more and 3 or less, and even still further preferably 0.5 or more and 2.9 or less. When the octanol/water partition coefficient of the affinity solvent is 0 or more, the water content of the vinylidene fluoride polymer solution is low, and the stability of the vinylidene fluoride polymer solution is likely to be enhanced. The octanol/water partition coefficient LogP is a common logarithm value (Log(Co/Cw)) of a ratio between a concentration Co of the affinity solvent in an octanol phase and a concentration Cw of the affinity solvent in a water phase when the affinity solvent is dissolved in a two phase system of octanol and water and brought into equilibrium at 25°C.

Specific examples of the affinity solvent include solvents including ketones such as diisobutyl ketone (molecular weight: 142, LogP: 2.56), methyl isobutyl ketone (molecular weight: 100, LogP: 1.31) and isophorone (molecular weight: 138, LogP: 1.67); esters such as ethylmethyl carbonate (molecular weight: 104, LogP: 1.21), amyl acetate (molecular weight: 130, LogP: 2.18), ethyl butyrate (molecular weight: 116, LogP: 1.85), butyl butyrate (molecular weight: 144, LogP: 2.8), isopropyl acetate (molecular weight: 102, LogP: 1.3) and ethyl propionate (molecular weight: 102, LogP: 1.21); and esters and ethers such as 2-butoxyethyl acetate (molecular weight: 160, LogP: 1.51).

Among the above, isophorone, diisobutyl ketone, methyl isobutyl ketone, amyl acetate, isopropyl acetate, ethyl butyrate, butyl butyrate, and ethyl propionate and are preferable as the affinity solvent from the perspective of handling and the like.

• Other components

The vinylidene fluoride polymer solution may contain a component other than the vinylidene fluoride polymer and the solvent in accordance with its use as long as the objects and effects of the present invention are not impaired. For example, the vinylidene fluoride polymer solution may further contain another type of resin such as an acrylic resin, a filler such as an inorganic filler, various additives, and the like.

• Physical properties

A concentration of the vinylidene fluoride polymer in the vinylidene fluoride polymer solution is not particularly limited, but is preferably 30 mass% or less. When the concentration of the vinylidene fluoride polymer is in this range, an undissolved residue or the like of the vinylidene fluoride polymer is unlikely to be generated, and the stability of the vinylidene fluoride polymer is likely to be enhanced. Furthermore, the vinylidene fluoride polymer solution can be easily used in various applications.

A haze value of the vinylidene fluoride polymer solution is preferably 18% or less, more preferably 15% or less, and still more preferably 10% or less. When the haze value of the vinylidene fluoride polymer solution is 18% or less, it can be said that the vinylidene fluoride polymer is sufficiently dissolved in the solvent. In addition, when the haze value is 18% or less, precipitation, separation, or the like of the vinylidene fluoride polymer is unlikely to occur even with the lapse of time.

The haze value of the vinylidene fluoride polymer solution was measured using NDH2000 available from Nippon Denshoku Industries Co., Ltd. in accordance with ISO 14782. The haze value in the present specification is a value obtained as follows: each vinylidene fluoride polymer solution is placed in a quartz cell, a diffuse light transmittance Td (%) and a total light transmittance Tt (%) are measured, and then the haze value is calculated based on the following equation:

$$\text{Haze value} = (Td/Tt) \times 100 \ (\%).$$

• Preparation method

A method for preparing the vinylidene fluoride polymer solution is not particularly limited, and the vinylidene fluoride polymer solution can be prepared by mixing a vinylidene fluoride polymer and a solvent by a known method to dissolve the vinylidene fluoride polymer in the solvent. The vinylidene fluoride polymer and the solvent are preferably mixed at a temperature of 40°C or higher and 150°C or lower, and the temperature is more preferably 60°C or higher and 100°C or lower. When the temperature is 60°C or higher, the vinylidene fluoride polymer is easily softened or dissolved. On the other hand, when the temperature is 100°C or lower, the solvent is unlikely to evaporate excessively, and a vinylidene fluoride polymer solution having a desired composition is likely to be obtained.

When the vinylidene fluoride polymer and the solvent are mixed, stirring is preferably performed by a known apparatus. The mixing time (stirring time) is preferably 3 minutes or more and 3 hours or less, more preferably 5 minutes or more and 2 hours or less, from the perspective of production efficiency. In the present invention, since the vinylidene fluoride polymer satisfying the above-described Requirements (A) to (C) and the solvent including the above-described affinity solvent are combined, it does not take much time when the vinylidene fluoride polymer is dissolved in the solvent, and the stability of the obtained vinylidene fluoride polymer solution can also be improved.

• Applications

The application of the vinylidene fluoride polymer solution is not particularly limited, and the vinylidene fluoride polymer solution can be used in various applications such as paints and coating agents, and various binders for non-aqueous electrolyte secondary batteries and all-solid-state batteries.

Examples

Hereinafter, specific examples of the present invention will be described together with comparative examples, but the present invention is not limited to these.

1. Preparation of vinylidene fluoride polymer

Vinylidene fluoride polymers A to G were prepared by the following method.

• Preparation of vinylidene fluoride polymer A

An autoclave was charged with 0.2 parts by mass of disodium hydrogen phosphate (Na2HPO4) and 330 parts by mass of water. After the degassing, 0.003 parts by mass of polyoxyethylene alkylene alkyl ether, 0.1 parts by mass of ethyl acetate, 8.7 parts by mass of vinylidene fluoride (VDF), and 38.0 parts by mass of hexafluoropropylene (HFP) were charged into the autoclave. Then, the temperature in the autoclave was raised to 80°C under stirring, and 0.06 parts by mass of ammonium persulfate (APS) was charged to initiate polymerization. At this time, the initial pressure was 2.5 MPa, and 53.3 parts by mass of VDF was continuously added so that the pressure was maintained at 2.5 MPa. When the pressure dropped to 1.5 MPa, the polymerization reaction ended, and a vinylidene fluoride-hexafluoropropylene copolymer (VDF-HFP copolymer) latex was obtained.

A resin concentration of the latex was 20.6 mass%, and an average particle size of the VDF-HFP copolymer in the latex was 221 nm. The average particle size of the VDF-HFP copolymer is a value derived by 50 times of integration using a DelsaMaxCORE (detector angle: 90°) available from Beckman Coulter, Inc.

Thereafter, the latex was frozen with liquid nitrogen, and further vacuum-dried for 8 hours under a reduced pressure of 30.0 Pa or less using a freeze-dryer to obtain vinylidene fluoride-hexafluoropropylene copolymer particles (vinylidene fluoride polymer A). A mass ratio of vinylidene fluoride to hexafluoropropylene derived by $^{19}$F-NMR was 63:37.

• Preparation of vinylidene fluoride polymer B

An autoclave was charged with 0.2 parts by mass of disodium hydrogen phosphate (Na2HPO4) and 330 parts by mass of water. After the degassing, 0.003 parts by mass of polyoxyethylene alkylene alkyl ether, 0.1 parts by mass of ethyl acetate, 5 parts by mass of vinylidene fluoride (VDF), and 47.0 parts by mass of hexafluoropropylene (HFP) were charged into the autoclave. Then, the temperature in the autoclave was raised to 80°C under stirring, and 0.3 parts by mass of ammonium persulfate (APS) was charged to initiate polymerization. At this time, the initial pressure was 2.5 MPa, and 48 parts by mass of VDF was continuously added so that the pressure was maintained at 2.5 MPa. When the pressure dropped to 1.5 MPa, the polymerization reaction ended, and a vinylidene fluoride-hexafluoropropylene copolymer (VDF-HFP copolymer) latex was obtained.

A resin concentration of the latex was 20.6 mass%, and an average particle size of the VDF-HFP copolymer in the latex was 100 nm. The average particle size of the VDF-HFP copolymer is a value derived by 50 times of integration using a DelsaMaxCORE (detector angle: 90°) available from Beckman Coulter, Inc.

Thereafter, the latex was frozen with liquid nitrogen, and further vacuum-dried for 8 hours under a reduced pressure of 30.0 Pa or less using a freeze-dryer to obtain vinylidene fluoride-hexafluoropropylene copolymer particles (vinylidene fluoride polymer B). A mass ratio of vinylidene fluoride to hexafluoropropylene derived by $^{19}$F-NMR was 55:45.

• Preparation of vinylidene fluoride polymer C

An autoclave was charged with 0.2 parts by mass of disodium hydrogen phosphate (Na2HPO4) and 330 parts by mass of water. After the degassing, 0.003 parts by mass of polyoxyethylene alkylene alkyl ether, 0.1 parts by mass of ethyl acetate, 13 parts by mass of vinylidene fluoride (VDF), and 24 parts by mass of hexafluoropropylene (HFP) were charged into the autoclave. Then, the temperature in the autoclave was raised to 80°C under stirring, and 0.06 parts by mass of ammonium persulfate (APS) was charged to initiate polymerization. At this time, the initial pressure was 2.5 MPa, and 63 parts by mass of VDF was continuously added so that the pressure was maintained at 2.5 MPa. When the pressure dropped to 1.5 MPa, the polymerization reaction ended, and a vinylidene fluoride-hexafluoropropylene copolymer (VDF-HFP copolymer) latex was obtained.

A resin concentration of the latex was 20.9 mass%, and an average particle size of the VDF-HFP copolymer in the latex was 180 nm. The average particle size of the VDF-HFP copolymer is a value derived by 50 times of integration using a DelsaMaxCORE (detector angle: 90°) available from Beckman Coulter, Inc.
Thereafter, the latex was frozen with liquid nitrogen, and further vacuum-dried for 8 hours under a reduced pressure of 30.0 Pa or less using a freeze-dryer to obtain vinylidene fluoride-hexafluoropropylene copolymer particles (vinylidene fluoride polymer C). A mass ratio of vinylidene fluoride to hexafluoropropylene derived by $^{19}$F-NMR was 80:20.

• Preparation of vinylidene fluoride polymer D

An autoclave was charged with 0.2 parts by mass of disodium hydrogen phosphate (Na2HPO4) and 330 parts by mass of water. After the degassing, 0.003 parts by mass of polyoxyethylene alkylene alkyl ether, 0.1 parts by mass of ethyl acetate, and 30 parts by mass of vinylidene fluoride (VDF) were charged into the autoclave. Then, the temperature in the autoclave was raised to 80°C under stirring, and 0.06 parts by mass of ammonium persulfate (APS) was charged to initiate polymerization. At this time, the initial pressure was 2.5 MPa, and 70 parts by mass of VDF was continuously added so that the pressure was maintained at 2.5 MPa. When the pressure dropped to 1.5 MPa, the polymerization reaction ended, and a vinylidene fluoride homopolymer (VDF homopolymer) latex was obtained.

A resin concentration of the latex was 20.9 mass%, and an average particle size of the VDF homopolymer in the latex was 150 nm. The average particle size of the VDF homopolymer is a value derived by 50 times of integration using a DelsaMaxCORE (detector angle: 90°) available from Beckman Coulter, Inc.
Thereafter, the latex was frozen with liquid nitrogen, and further vacuum-dried for 8 hours under a reduced pressure of 30.0 Pa or less using a freeze-dryer to obtain vinylidene fluoride homopolymer particles (vinylidene fluoride homopolymer D).

• Preparation of vinylidene fluoride polymer E

An autoclave was charged with 0.3 parts by mass of disodium hydrogen phosphate (Na2HPO4) and 380 parts by mass of water. After the degassing, 0.003 parts by mass of polyoxyethylene alkylene alkyl ether, 0.1 parts by mass of ethyl acetate, 25 parts by mass of vinylidene fluoride (VDF), and 10 parts by mass of hexafluoropropylene (HFP) were charged into the autoclave. Then, the temperature in the autoclave was raised to 80°C under stirring, and 0.2 parts by mass of ammonium persulfate (APS) was charged to initiate polymerization. At this time, the initial pressure was 4.01 MPa, and 65 parts by mass of VDF was continuously added so that the pressure was maintained at 2.5 MPa. When the pressure dropped to 1.5 MPa, the polymerization reaction ended, and a vinylidene fluoride-hexafluoropropylene copolymer (VDF-HFP copolymer) latex was obtained.

A resin concentration of the latex was 20.9 mass%, and an average particle size of the VDF-HFP copolymer in the latex was 129 nm. The average particle size of the VDF-HFP copolymer is a value derived by 50 times of integration using a DelsaMaxCORE (detector angle: 90°) available from Beckman Coulter, Inc.
Thereafter, the latex was frozen with liquid nitrogen, and further vacuum-dried for 8 hours under a reduced pressure of 30.0 Pa or less using a freeze-dryer to obtain vinylidene fluoride-hexafluoropropylene copolymer particles (vinylidene fluoride polymer E). A mass ratio of vinylidene fluoride to hexafluoropropylene derived by $^{19}$F-NMR was 91:9.

• Preparation of vinylidene fluoride polymer F

An autoclave was charged with 0.2 parts by mass of disodium hydrogen phosphate (Na2HPO4) and 330 parts by mass of water. After the degassing, 0.003 parts by mass of polyoxyethylene alkylene alkyl ether, 0.2 parts by mass of ethyl acetate, 8 parts by mass of vinylidene fluoride (VDF), and 32 parts by mass of hexafluoropropylene (HFP) were charged into the autoclave. Then, the temperature in the autoclave was raised to 80°C under stirring, and 0.3 parts by mass of ammonium persulfate (APS) was charged to initiate polymerization. At this time, the initial pressure was 2.5 MPa, and 60 parts by mass of VDF was continuously added so that the pressure was maintained at 2.5 MPa. When the pressure dropped to 1.5 MPa, the polymerization reaction ended, and a vinylidene fluoride-hexafluoropropylene copolymer (VDF-HFP copolymer) latex was obtained.

A resin concentration of the latex was 20.9 mass%, and an average particle size of the VDF-HFP copolymer in the latex was 210 nm. The average particle size of the VDF-HFP copolymer is a value derived by 50 times of integration using a DelsaMaxCORE (detector angle: 90°) available from Beckman Coulter, Inc.

Thereafter, the latex was frozen with liquid nitrogen, and further vacuum-dried for 8 hours under a reduced pressure of 30.0 Pa or less using a freeze-dryer to obtain vinylidene fluoride-hexafluoropropylene copolymer particles. The granulated copolymer particles were dissolved by adding 5 parts by mass of acetone per part by mass of the granulated copolymer particles. To this acetone solution, 10 parts by mass of hexane was added and stirred, followed by filtration to obtain a rubber-like precipitation. The rubber-like precipitation was dried with a vacuum dryer to obtain vinylidene fluoride-hexafluoropropylene copolymer particles (vinylidene fluoride polymer F). A mass ratio of vinylidene fluoride to hexa-fluoropropylene derived by $^{19}$F-NMR was 70:30.

• Preparation of vinylidene fluoride polymer G

One(1) kg of deionized and deoxygenated water, 2.4 g of ammonium persulfate, 4.0 g of ammonium perfluorooctanoate, and 0.8 g of acidic sodium sulfite were charged into an autoclave having a volume of 5 L with a stirrer and a temperature regulating jacket outside, and 0.2 g of sodium hydroxide was further added. After the inside of the autoclave was replaced with nitrogen gas three times, 170 g of vinylidene fluoride (VDF), 80 g of tetrafluoroethylene (TFE), and 90 g of hexafluoropropylene (HFP) were charged, and the mixture was polymerized at 60°C for 7 hours with stirring. The polymer was coagulated, separated by filtration, washed with water, washed with n-hexane, and, further, dried with a vacuum dryer to obtain 160 g of a white powdery vinylidene fluoride polymer G. A composition of the vinylidene fluoride polymer G was VDF:TFE:HFP (mass ratio) of 61:24:15.

• Measurement of physical properties of vinylidene fluoride polymer

DSC curves and X-ray diffraction patterns of the vinylidene fluoride polymers A to G obtained by the above method were obtained based on the following method.

(DSC curve)

Each of the vinylidene fluoride polymers was subjected to differential scanning calorimetry in a range of from 20°C to 230° in accordance with ASTM D3418 using a STARe DSC1 (apparatus) available from METTLER TOLEDO to prepare a DSC curve. The measurement was performed under a nitrogen flow at a temperature rising rate of 10°C/min and 50 mL/min.

In addition, a group of measured values that was convex to the endothermic side with respect to the baseline was regarded as a peak, and a measured value corresponding to a local maximum value of a curve formed by the group of measured values was regarded as a peak top. Note that the baseline was specified as follows.

At three measurement points in a range of 40°C or higher and 41°C or lower and three measurement points in a range of 120°C or higher and 121°C or lower, an average value of heat fluxes and an average value of temperatures in each temperature section were calculated. A straight line connecting two points of the average value of the values at the respective measurement points in the range of 40°C or higher and 41°C or lower and the average value of the values at the respective measurement points in the range of 120°C or higher and 121°C or lower calculated as described above was used as the baseline.

(X-ray diffraction measurement)

As an apparatus, X' Pert-PRO available from Philips Co. was used. A Bragg-Brentano type concentrated optical system was used as an optical system, a Cu bulb tube was used to generate X-rays, a voltage value was 45 kV, and a current value was 40 mA. The X-rays were monochromatized using a Ni filter, and a movable slit (irradiation area: 1 cm × 1 cm) was used. A polyimide kapton tape was used if it was necessary to secure a sample.

The X-ray diffraction measurement of each vinylidene fluoride polymer was performed based on JIS K0131: 1996 under the apparatus conditions as described above. The measurement range in each measurement was from 10.00° to 60.00°, the number of scan steps was 0.026 per degree (°), and the time per step was 86.19/second. The X-ray diffraction pattern of each vinylidene fluoride polymer is presented in FIG. 1. In the obtained X-ray diffraction pattern, it was confirmed whether a local maximum value was present in a diffraction angle range of 10° or more and 19.9° or less, and whether the maximum diffraction intensity in a diffraction angle range of 22.5° or more and 30° or less was equal to or less than the maximum diffraction intensity in a diffraction angle range of 10° or more and 19.9° or less.

Specifically, an average value of diffraction angles and an average value of diffraction intensities at a plurality of measurement points in a diffraction angle range of 10.0° or more and less than 10.1° in the X-ray diffraction measurement were each calculated. Similarly, an average value of diffraction angles and an average value of diffraction intensities at a plurality of measurement points in a diffraction angle range of 30.0° or more and less than 30.1° were each calculated.

Then, a straight line connecting two points of the values of the diffraction angle and the diffraction intensity calculated as described above was used as the baseline. Then, the diffraction intensities at the points on the baseline were compared with the diffraction intensities on the X-ray diffraction pattern at the same diffraction angles, and when the diffraction intensities at continuous five or more points on the X-ray diffraction pattern indicated a value of 1.5 times or more the diffraction intensities on the baseline, the X-ray diffraction pattern was determined to have a peak. Further, a local maximum value was specified in a group of measured values in which the diffraction intensities at continuous five or more points on the X-ray diffraction pattern indicated a value of 1.5 times or more the diffraction intensities on the baseline, and it was specified whether or not the local maximum value fell within the diffraction angle range of 10° or more and 19.9° or less.

According to the specifying method, for example, in the X-ray diffraction patterns of the vinylidene fluoride polymers F and G, there was no point at which the diffraction intensity of the measured value was 1.5 times or more the corresponding diffraction intensity on the baseline in the diffraction angle range of 10° or more and 19.9° or less, and thus it was determined that there was no local maximum value. The results are indicated in Table 1.

[Table 1]

| Vinylidene fluoride polymer | Composition (Mass ratio) | DSC curve 60°C ≤ peak top < 100°C (Local maximum value) | X-ray diffraction measurement | |
|---|---|---|---|---|
| | | | Local maximum value at a diffraction angle of 10° or more and 19.9° or less | Maximum diffraction intensity at a diffraction angle of from 22.5° to 30° ≤ maximum diffraction intensity at a diffraction angle of from 10° to 19.9° |
| A | VDF/HFP (63:37) | ○ (73°C) | ○ | ○ |
| B | VDF/HFP (55:45) | ○ (90°C) | ○ | ○ |
| C | VDF/HFP (80:20) | × (127°C) | ○ | × |
| D | VDF (-) | × (164°C) | ○ | × |
| E | VDF/HFP (91:9) | × (138°C) | ○ | ○ |
| F | VDF/HFP (70:30) | ○ (90°C) | × | × |
| G | VDF/HFP/TFE (61:24:15) | × (no peak) | × | × |

2. Preparation of vinylidene fluoride polymer solution

2-1. Preparation of solvent

Solvents having physical properties presented in Table 2 below were provided. Each physical property value presented in Table 2 is a literature value, 1 cP corresponds to 1 millipascal-second (mPa·s).

[Table 2]

| Solvent | Molecular weight | Functional group | Boiling point (°C) | Freezing point (°C) | Viscosity (cP) | Octanol/ water partition coefficient LogP |
|---|---|---|---|---|---|---|
| Butyl butyrate | 144 | Ester | 166 | -92 | 0.98 | 2.83 |
| Diisobutyl ketone | 142 | Ketone | 169 | -42 | 0.89 | 2.56 |
| n-Octane | 114 | No | 125 | -60 | 0.52 | 5.18 |
| o-Xylene | 106 | No | 144 | -48 | 0.76 | 3.1 |

(continued)

| Solvent | Molecular weight | Functional group | Boiling point (°C) | Freezing point (°C) | Viscosity (cP) | Octanol/ water partition coefficient LogP |
|---|---|---|---|---|---|---|
| Toluene | 92 | No | 110 | -95 | 0.59 | 2.73 |
| Amyl acetate | 130 | Ester | 149 | -71 | 0.73 | 2.18 |
| Ethyl butyrate | 116 | Ester | 120 | -93 | 0.64 | 1.85 |
| Ethyl propionate | 102 | Ester | 99 | -73 | 0.005 | 1.21 |
| Isophorone | 138 | Cyclic ketone | 215 | -8 | 2.6 | 1.67 |
| Cyclohexanone | 98 | Ketone | 156 | -16 | 2.01 | 0.08 |
| Methyl isobutyl ketone | 100 | Ketone | 118 | -85 | 0.58 | 1.31 |
| Isopropyl acetate | 102 | Ester | 89 | -73 | 0.49 | 1.3 |

2-2. Preparation of vinylidene fluoride polymer solution

The vinylidene fluoride polymers and the solvents were mixed in the combinations presented in Tables 3 and 4 to obtain vinylidene fluoride polymer solutions. The vinylidene fluoride polymers and the solvents were stirred and mixed at 70°C and 700 rpm for 3 hours. Concentrations of the vinylidene fluoride polymers in the solutions at this time are expressed as solution concentrations. Then, for the vinylidene fluoride polymer solutions, the solution state, haze value, and fluidity were measured as follows. The results are presented in Tables 3 and 4.

(Solution state)

Each vinylidene fluoride polymer solution was visually checked to confirm whether separation, clouding, precipitation, or gelation occurred.

(Measurement of haze)

The haze was measured with NDH2000 available from Nippon Denshoku Industries Co., Ltd. Each vinylidene fluoride polymer solution was placed in a quartz cell, the diffuse light transmittance Td (%) and the total light transmittance Tt (%) were measured, and the haze value was calculated as follows:

$$\text{Haze value} = (Td/Tt) \times 100 \ (\%).$$

In the measurement, the haze of the solvent used in each Example and each Comparative Example was assumed to be 0, and the haze of the sample was derived.
When separation was observed in the sample or when the sample was in an undissolved state, an accurate haze could not be derived, and thus the haze in such a case was defined as "unmeasurable" (indicated as "-" in Table 4).

(Fluidity)

Each vinylidene fluoride polymer solution was added to a screw bottle and the screw bottle was inclined to an angle of 45 degrees. Whether or not a horizontal plane was observed in the vinylidene fluoride polymer solution inside the inclined screw bottle was visually confirmed based on the following criteria for determination.

○: A horizontal plane could be confirmed, and neither phase separation nor precipitation was observed.
✕: A horizontal plane could not be confirmed, or even when a horizontal plane was confirmed, phase separation occurred in the vinylidene fluoride polymer solution and partial precipitation occurred.

[Table 3]

| | Vinylidene fluoride polymer | Solvent | Solution concentration (mass%) | Solution state | Haze value | Fluidity |
|---|---|---|---|---|---|---|
| Example 1 | A | Butyl butyrate | 5 | Transparent | 1.2 | ○ |
| Example 2 | A | Butyl butyrate | 7 | Transparent | 2.8 | ○ |
| Example 3 | B | Butyl butyrate | 7 | Transparent | 0.4 | ○ |
| Example 4 | B | Butyl butyrate | 25 | Transparent | 2.4 | ○ |
| Example 5 | A | Diisobutyl ketone | 5 | Transparent | 3.6 | ○ |
| Example 6 | A | Diisobutyl ketone | 7 | Transparent | 4.0 | ○ |
| Example 7 | B | Diisobutyl ketone | 7 | Transparent | 0 | ○ |
| Example 8 | B | Diisobutyl ketone | 25 | Transparent | 2.1 | ○ |
| Example 9 | A | Ethyl propionate | 14 | Transparent | 11.2 | ○ |
| Example 10 | B | Ethyl propionate | 30 | Transparent | 10.5 | ○ |
| Example 11 | A | Mixed solvent (butyl butyrate 90 wt% + toluene 10 wt%) | 7 | Transparent | 12.5 | ○ |
| Example 12 | B | Mixed solvent (butyl butyrate 90 wt% + toluene 10 wt%) | 7 | Transparent | 1.5 | ○ |
| Example 13 | B | Amyl acetate | 10 | Transparent | 10.1 | ○ |
| Example 14 | A | Isophorone | 5 | Transparent | 4.9 | ○ |
| Example 15 | B | Isophorone | 5 | Transparent | 1.0 | ○ |
| Example 16 | A | Ethyl butyrate | 7 | Transparent | 3.2 | ○ |
| Example 17 | B | Ethyl butyrate | 7 | Transparent | 0 | ○ |
| Example 18 | A | Isopropyl acetate | 10 | Transparent | 1.1 | ○ |
| Example 19 | B | Isopropyl acetate | 10 | Transparent | 0.1 | ○ |
| Example 20 | A | Methyl isobutyl ketone | 10 | Transparent | 1.2 | ○ |
| Example 21 | B | Methyl isobutyl ketone | 10 | Transparent | 0.2 | O |

[Table 4]

| | Vinylidene fluoride polymer | Solvent | Solution concentration (mass%) | Solution state | Haze value | Fluidity |
|---|---|---|---|---|---|---|
| Comparative Example 1 | C | Butyl butyrate | 7 | Cloudy | 28.8 | ○ |
| Comparative Example 2 | D | Butyl butyrate | 7 | Separated | - | × |
| Comparative Example 3 | E | Butyl butyrate | 7 | Separated | - | × |
| Comparative Example 4 | F | Butyl butyrate | 7 | Separated | - | × |
| Comparative Example 5 | G | Butyl butyrate | 7 | Undissolved material present | - | × |
| Comparative Example 6 | C | Diisobutyl ketone | 7 | Separated | - | × |
| Comparative Example 7 | D | Diisobutyl ketone | 7 | Separated | - | × |
| Comparative Example 8 | E | Diisobutyl ketone | 7 | Separated | - | × |
| Comparative Example 9 | F | Diisobutyl ketone | 7 | Cloudy | 18.7 | ○ |
| Comparative Example 10 | G | Diisobutyl ketone | 7 | Undissolved material present | - | × |
| Comparative Example 11 | A | Cyclohexanone | 7 | Cloudy | 28.1 | ○ |
| Comparative Example 12 | C | Ethyl propionate | 14 | Gelling | - | × |
| Comparative Example 13 | D | Ethyl propionate | 14 | Separated | - | × |
| Comparative Example 14 | E | Ethyl propionate | 14 | Gelling | - | × |
| Comparative Example 15 | F | Ethyl propionate | 14 | Gelling | - | × |
| Comparative Example 16 | G | Ethyl propionate | 14 | Undissolved | - | × |
| Comparative Example 17 | A | n-Octane | 7 | Undissolved | - | × |
| Comparative Example 18 | B | p-Xylene | 7 | Undissolved | - | × |
| Comparative Example 19 | C | Amyl acetate | 7 | Separated | - | × |
| Comparative Example 20 | D | Amyl acetate | 7 | Separated | - | × |
| Comparative Example 21 | F | Amyl acetate | 7 | Gelling | - | × |

(continued)

|  | Vinylidene fluoride polymer | Solvent | Solution concentration (mass%) | Solution state | Haze value | Fluidity |
|---|---|---|---|---|---|---|
| Comparative Example 22 | G | Amyl acetate | 7 | Undissolved | - | × |
| Comparative Example 23 | D | Isophorone | 7 | Separated | - | × |
| Comparative Example 24 | G | Isophorone | 7 | Undissolved | - | × |
| Comparative Example 25 | E | Isopropyl acetate | 10 | Gelling | - | × |
| Comparative Example 26 | G | Methyl isobutyl ketone | 10 | Undissolved | - | × |

As presented in Table 3 above, when the vinylidene fluoride polymers satisfying the above Requirements (A) to (C) were combined with the solvents including the above affinity solvent, the obtained vinylidene fluoride polymer solutions were transparent and had good fluidity. Furthermore, the haze values were also low (Examples 1 to 21). As presented in Table 4, even when the vinylidene fluoride polymer satisfied Requirements (A) to (C), when the solvent included no affinity solvent, specifically, when the solvent had a molecular weight of less than 100, the solvent, even though contained an ether, a ketone, or an ester, had excessively high polarity and low affinity with the polymer described above, and thus the primary particles aggregated and the solution became cloudy (Comparative Example 11). The solvents having a molecular weight of 100 or more but not containing any of an ether, a ketone, and an ester had excessively low polarity and did not dissolve the polymers (Comparative Examples 17 and 18).

In Comparative Examples 2, 7, 13, 20, and 23 in which the vinylidene fluoride polymer D not satisfying Requirement (A) was used, precipitation and separation were likely to occur. One of the reasons is considered to be insufficient compatibility with the solvents. In Comparative Examples 1, 3, 6, 8, 12, 14, 19, and 25 in which the vinylidene fluoride polymer C or E satisfying Requirement (A) but not satisfying Requirement (B) was used, gelation or separation occurred. Also in this case, it is considered that the polymers were not sufficiently compatible with the solvents. Furthermore, in Comparative Examples 4, 5, 9, 10, 15, 16, 21, 22, 24, and 26 in which the vinylidene fluoride polymer F satisfying Requirements (A) and (B) but not satisfying Requirement (C) or the vinylidene fluoride polymer G not satisfying Requirement (B) or (C) was used, an undissolved material was generated depending on the solvent used. One of the reasons is considered to be that, since the vinylidene fluoride polymers F and G were in a rubbery state, the solvents were less likely to enter the inside thereof.

The present application claims priority from the Japanese patent application No. 2021-164151 filed on October 5, 2021.

[Industrial Applicability]

The present invention can provide a vinylidene fluoride polymer solution in which a vinylidene fluoride polymer is completely dissolved in a solvent that has a lower environmental impact and is easy to handle. The vinylidene fluoride polymer solution can be used in various fields.

## Claims

1.   A vinylidene fluoride polymer solution comprising a vinylidene fluoride polymer and a solvent,

   the solvent comprising an affinity solvent having a molecular weight of 100 or more and containing at least one structure selected from ethers, ketones, and esters, and
   the vinylidene fluoride polymer satisfying the following (A) to (C):

      (A) comprising a structural unit derived from vinylidene fluoride and a structural unit derived from a fluorine-containing alkyl vinyl compound;
      (B) having a peak top in a range of 60°C or higher and lower than 100°C in a DSC curve obtained by differential thermal analysis in accordance with ASTM D3418; and
(C) in an X-ray diffraction pattern obtained by X-ray diffraction measurement according to JIS K0131: 1996, having at least one local maximum value in a diffraction angle range of 10° or more and 19.9° or less, and a maximum diffraction intensity in a diffraction angle range of 22.5° or more and 30° or less is equal to or less than a maximum diffraction intensity in a diffraction angle range of 10° or more and 19.9° or less.

2.  The vinylidene fluoride polymer solution according to claim 1,

   wherein an octanol/water partition coefficient LogP of the affinity solvent having said structure is 0 or more, wherein
   the octanol/water partition coefficient LogP is a common logarithm value (Log(Co/Cw)) of a ratio between a concentration Co of the solvent having said structure in an octanol phase and a concentration Cw of the solvent having said structure in a water phase when the solvent having said structure is dissolved in a two phase system of octanol and water and brought into equilibrium at 25°C.

3.  The vinylidene fluoride polymer solution according to claim 1 or 2,
   wherein the solvent comprises at least one selected from the group consisting of isophorone, diisobutyl ketone, amyl acetate, ethyl butyrate, butyl butyrate, and ethyl propionate.

4.  The vinylidene fluoride polymer solution according to any one of claims 1 to 3,
   wherein the fluorine-containing alkyl vinyl compound is hexafluoropropylene.

5.  The vinylidene fluoride polymer solution according to any one of claims 1 to 4, wherein a concentration of the vinylidene fluoride polymer is 30 mass% or less.

6.  The vinylidene fluoride polymer solution according to any one of claims 1 to 5, wherein a haze value is 18% or less, wherein
   the haze value is measured as follows: the vinylidene fluoride polymer solution is placed in a quartz cell, a diffuse light transmittance Td (%) and a total light transmittance Tt (%) are measured using NDH2000 available from Nippon Denshoku Industries Co., Ltd, and then the haze value is calculated based on the following equation:

$$\text{Haze value} = (Td/Tt) \times 100 \ (\%).$$

**Patentansprüche**

1.  Vinylidenfluoridpolymerlösung, umfassend ein Vinylidenfluoridpolymer und ein Lösungsmittel, wobei das Lösungsmittel ein Affinitätslösungsmittel mit einem Molekulargewicht von 100 oder mehr umfasst und mindestens eine Struktur enthält, die ausgewählt ist aus Ethern, Ketonen und Estern, und wobei das Vinylidenfluoridpolymer die folgenden Bedingungen (A) bis (C) erfüllt:

   (A) es umfasst eine Struktureinheit, abgeleitet von Vinylidenfluorid, und eine Struktureinheit, abgeleitet von einer fluorhaltigen Alkylvinylverbindung;
   (B) es umfasst ein Peakmaximum in einem Bereich von 60 °C oder höher und unter 100 °C in einer DSC-Kurve, die durch Differentialthermoanalyse gemäß ASTM D3418 erhalten wird; und
   (C) es weist in einem Röntgenbeugungsmuster, das durch Röntgenbeugungsmessung gemäß JIS K0131: 1996 erhalten wird, mindestens einen Wert eines lokalen Maximums in einem Beugungswinkelbereich von 10° oder mehr und 19,9° oder weniger auf, und eine maximale Beugungsintensität in einem Beugungswinkelbereich von 22,5° oder mehr und 30° oder weniger ist gleich oder kleiner einer maximalen Beugungsintensität in einem Beugungswinkelbereich von 10° oder mehr und 19,9° oder weniger.

2.  Vinylidenfluoridpolymerlösung nach Anspruch 1,

   wobei ein Octanol/Wasser-Verteilungskoeffizient LogP des Affinitätslösungsmittels mit der Struktur 0 oder mehr beträgt, wobei
   der Octanol/Wasser-Verteilungskoeffizient LogP ein Wert eines dekadischen Logarithmus (Log(Co/Cw)) eines Verhältnisses zwischen einer Konzentration Co des Lösungsmittels mit der Struktur in einer Octanolphase und einer Konzentration Cw des Lösungsmittels mit der Struktur in einer Wasserphase ist, wenn das Lösungsmittel mit der Struktur in einem Zweiphasensystem aus Octanol und Wasser gelöst und bei 25 °C ins Gleichgewicht gebracht wird.

3. Vinylidenfluoridpolymerlösung nach Anspruch 1 oder 2,
wobei das Lösungsmittel mindestens eines aus der Gruppe bestehend aus Isophoron, Diisobutylketon, Amylacetat, Ethylbutyrat, Butylbutyrat und Ethylpropionat umfasst.

4. Vinylidenfluoridpolymerlösung nach einem der Ansprüche 1 bis 3,
wobei die fluorhaltige Alkylvinylverbindung Hexafluorpropylen ist.

5. Vinylidenfluoridpolymerlösung nach einem der Ansprüche 1 bis 4,
wobei eine Konzentration des Vinylidenfluoridpolymers 30 Massen-% oder weniger beträgt.

6. Vinylidenfluoridpolymerlösung nach einem der Ansprüche 1 bis 5,

wobei ein Trübungswert 18 % oder weniger beträgt, wobei
der Trübungswert wie folgt gemessen wird: Die Vinylidenfluoridpolymerlösung wird in eine Quarzzelle eingebracht, eine diffuse Lichtdurchlässigkeit Td (%) und eine Gesamtlichtdurchlässigkeit Tt (%) werden unter Verwendung von NDH2000, erhältlich bei Nippon Denshoku Industries Co., Ltd., gemessen, und dann wird der Trübungswert auf Basis der folgenden Gleichung berechnet:

$$\text{Trübungswert} = (Td/Tt) \times 100 \ (\%).$$

## Revendications

1. Solution de polymère de fluorure de vinylidène comprenant un polymère de fluorure de vinylidène et un solvant, le solvant comprenant un solvant d'affinité ayant une masse moléculaire de 100 ou plus et contenant au moins une structure choisie parmi les éthers, cétones, et esters, et le polymère de fluorure de vinylidène satisfaisant ce qui suit (A) à (C) :

(A) comprenant une unité structurale dérivée du fluorure de vinylidène et une unité structurale dérivée d'un composé d'alkyle vinyle contenant du fluor ;
(B) ayant un sommet de pic dans une plage de 60 °C ou plus et inférieur à 100 °C dans une courbe DSC obtenue par analyse thermique différentielle conformément à la norme ASTM D3418 ; et
(C) dans un diagramme de diffraction des rayons X obtenu par mesure de diffraction des rayons X selon la norme JIS K0131 : 1996, ayant au moins une valeur maximale locale dans une plage d'angles de diffraction de 10 ° ou plus et de 19,9 ° ou moins, et une intensité de diffraction maximale dans une plage d'angles de diffraction de 22,5 ° ou plus et de 30 ° ou moins est égale ou inférieure à une intensité de diffraction maximale dans une plage d'angles de diffraction de 10 ° ou plus et de 19,9 ° ou moins.

2. Solution de polymère de fluorure de vinylidène selon la revendication 1,

dans laquelle un coefficient de partage octanol/eau LogP du solvant d'affinité ayant ladite structure est égal ou supérieur à 0, dans laquelle
le coefficient de partage octanol/eau LogP est une valeur de logarithme commun (Log(Co/Cw)) d'un rapport entre une concentration Co du solvant ayant ladite structure dans une phase octanol et une concentration Cw du solvant ayant ladite structure dans une phase aqueuse lorsque le solvant ayant ladite structure est dissous dans un système biphasique d'octanol et d'eau et amené à l'équilibre à 25 °C.

3. Solution de polymère de fluorure de vinylidène selon la revendication 1 ou 2,
dans laquelle le solvant comprend au moins un élément choisi dans le groupe constitué d'isophorone, cétone de diisobutyle, acétate d'amyle, butyrate d'éthyle, butyrate de butyle et propionate d'éthyle.

4. Solution de polymère de fluorure de vinylidène selon l'une quelconque des revendications 1 à 3,

dans laquelle le composé alkyle-vinyle contenant du fluor est l'hexafluoropropylène.

5. Solution de polymère de fluorure de vinylidène selon l'une quelconque des revendications 1 à 4,
   dans laquelle une concentration du polymère de fluorure de vinylidène est de 30 % en masse ou moins.

6. Solution de polymère de fluorure de vinylidène selon l'une quelconque des revendications 1 à 5,

   dans laquelle une valeur de trouble est de 18 % ou moins, dans laquelle
   la valeur de trouble est mesurée comme suit : le fluorure de vinylidène solution de polymère est placé dans une
   cellule de quartz, une lumière diffuse transmittance Td (%) et une transmittance lumineuse totale Tt (%) sont
   mesurés à l'aide des NDH2000 disponibles auprès de Nippon Denshoku Industries Co., Ltd, puis les valeur de
   trouble sont calculés sur la base de l'équation suivante :

$$\text{Valeur de trouble} = (Td/Tt) \times 100\ (\%).$$

[FIG. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3220272 A
- WO 2021039950 A1
- JP 2021164151 A